# EUROPEAN PATENT APPLICATION

(11) **EP 4 549 072 A1**
(43) Date of publication of application: **07.05.2025**
(21) Application number: 24208173.5
(22) Date of filing: 22.10.2024
(51) Int. Cl.: B23K 9/28, B23K 9/29, B23K 9/32

(54) **WELDING TORCH HAVING INTEGRATED CABLES**

(30) Priority: 31.10.2023 US 202363546603 P; 18.10.2024 US 202418920177
(71) Applicant: Illinois Tool Works Inc., Glenview IL 60025 (US)
(72) Inventor: HOEGER, Michael, 60025 Glenview (US)
(74) Representative: HGF

(57) **Abstract**

An example welding torch includes a torch head, a torch handle including conductive tubing electrically and mechanically connected to the torch head at a first end of the conductive tubing, one or more welding power conductors, a gas conductor, and one or more coolant lines directly connected to a second end of the conductive tubing, and a casing configured to cover the one or more welding power conductors. An example welding torch includes a torch head configured to conduct welding-type power, a torch handle including conductive tubing coupled to the torch head, and a torch cable integrally coupled to the torch handle at a first end of the torch cable, the torch cable and the torch handle including an electrical path from a power supply connector to the torch head and a coolant path to cool the torch head.

## Description

### FIELD OF THE DISCLOSURE

This disclosure relates generally to welding torches and, more particularly, to welding torches having integrated cables.

### BACKGROUND

In conventional gas tungsten arc welding (GTAW) torches, the torch head, the power cable, and the welding power source connector are provided individually and the consumer is responsible for the selection and assembly of the welding torch. The torch head, power cable, coolant lines and welding power source of conventional GTAW torches can be replaced if damaged. However, selecting and assembling individual components adds significant complexity, time, and cost in terms of manufacturing and end user experience.

### SUMMARY

Welding torches having integrated cables are disclosed, substantially as illustrated by and described in connection with at least one of the figures, as set forth more completely in the claims.

### BRIEF DESCRIPTION OF THE DRAWINGS

FIG. 1 illustrates an example welding-type system, in accordance with aspects of this disclosure.
FIG. 2 is a perspective view of an example integrated welding torch of FIG. 1.
FIG. 3 is a perspective view of a second example integrated welding torch of FIG. 1.
FIG. 4 is a cross-section detailed view of the connection of FIG. 2.
FIG. 5 is a detailed cross-section of an example cross-section of FIG. 2.
FIG. 6 is a second detailed cross-section of an example cross-section of FIG. 2.
FIGs. 7A-7B is a flowchart representative of an example method to construct a single cable assembly as depicted in FIG. 5.
FIGs. 8A and 8B is a flowchart representative of an example method to construct a dual cable assembly as depicted in FIG. 6.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

As discussed above, selecting and assembling individual components of welding torches adds significant complexity in terms of time and cost. Disclosed example welding torches and power cables have integrated components and fewer parts, resulting in less assembly time for the consumer. Additionally, when integrating welding torches, fewer parts may be selected as assembly is no longer required. Additional components and manufacturing steps tend to add time and cost to a welding torch, and additional components may add cost and/or potential for supply chain problems.

Disclosed example integrated welding torches and power cables enable customers to select from integrated welding torches that are already assembled and ready to use. Disclosed example welding torches and power cables substantially reduce manufacturing complexity and costs, compared with providing separate welding torch components, by eliminating manufacturing steps and/or higher-cost manufacturing steps from the manufacturing process. Disclosed example welding torches, coolant lines, and power cables eliminate unnecessary or redundant parts, and eliminate and/or consolidate production operations. In disclosed example welding torches, coolant lines, power cables, the torch head, torch body, connectors, and/or coolant lines are integrated into a single piece. A single piece may refer to an integral piece, and/or multiple pieces which are non-serviceably attached, such that separation or removal of non-serviceable pieces would result in destruction of the separated pieces.

In some disclosed examples, the torch head and handle are overmolded with the coolant lines, power cables, and power source connector. The conductor of the power cable is directly attached to the conductive tubing in the torch. The conductive tubing in the torch includes a power cable termination, a power conductor crimped region, and coolant pass though side bore hole. The hose of the power cable may to the conductive tubing of the torch using a crimped connection.

As used herein, the word "exemplary" means "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

Disclosed example welding torches include a torch head configured to provide welding-type power, a torch handle comprising conductive tubing electrically and mechanically connected to the torch head at a first end of the conductive tubing, two or more welding power conductors in parallel, two or more coolant lines in series, and a gas conductor arranged within the conductive tubing, and a casing configured to cover the two or more welding power conductors, the two or more coolant lines, and the conductive tubing. In disclosed example welding torches, the two or more welding power conductors and the two or more coolant lines route coolant and an electrical current to the torch head.

In some disclosed example welding torches, the two or more coolant lines include the two or more welding power conductors. In some disclosed example welding torches, the torch head is joined to the conductive tubing within the torch handle. In some disclosed example welding torches, the conductive tubing comprises a side bore hole and is fluidly coupled to the two or more coolant lines via a coolant passage. In some disclosed example welding torches, the conductive tubing connects directly to a power cable.

Some disclosed example welding torches include a power cable directly connected to the conductive tubing, wherein the power cable includes the two or more welding power conductors, the gas conductor, and the two or more coolant lines. In some disclosed example welding torches, the casing comprises an overmolding.

In some disclosed example welding torches, the casing is further configured to cover the torch head, the torch handle, the gas conductor, and the one or more coolant lines. In some disclosed example welding torches, the casing is the torch handle, and the torch handle is integrated with the two or more welding power conductors, the gas conductor, and the two or more coolant lines.

In some disclosed example welding torches, the two or more welding power conductors, the gas conductor, and the two or more coolant lines are configured to be directly connected to an end of a hose over the conductive tubing. In some disclosed example welding torches, the two or more welding power conductors, the gas conductor, and the two or more coolant lines terminate at a power supply connector to connect to a power supply and a cooler.

Disclosed example welding torches include a torch head configured to conduct welding-type power, a torch handle including conductive tubing coupled to the torch head; and a torch cable integrally coupled to the torch handle at a first end of the torch cable and comprising a power supply connector on a second end of the torch cable. In disclosed example welding torches, the torch cable and the torch handle include an electrical path from the power supply connector to the torch head, a coolant path to cool the torch head, the coolant path and the electrical path sharing at least one component within at least one of the torch handle or the torch cable, and a gas path to the torch head.

In some disclosed example welding torches, the coolant path includes the electrical path. Some disclosed example welding torches include a casing configured to cover the torch head, the torch handle, and the torch cable.

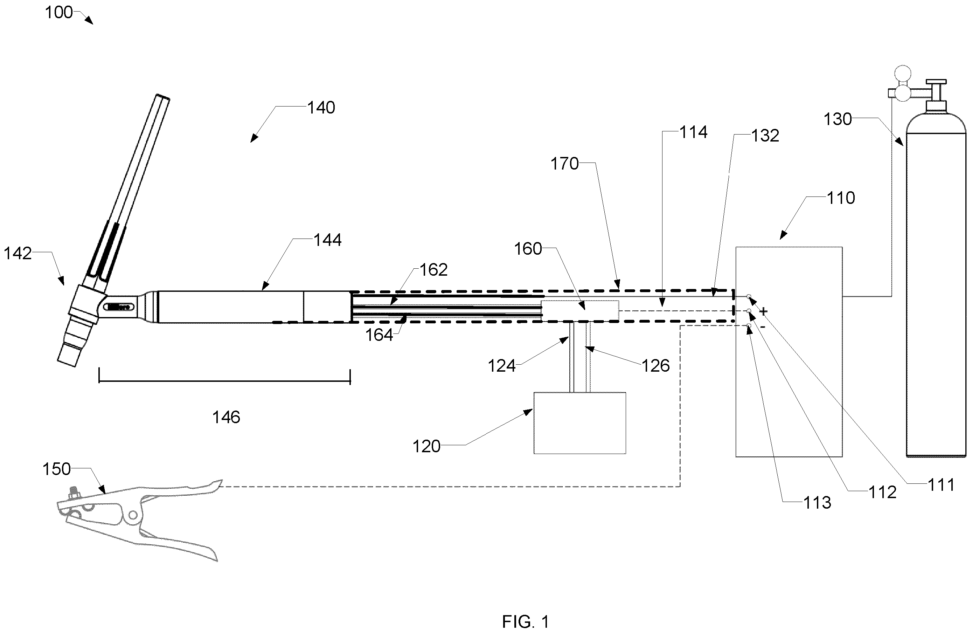

FIG. 1 illustrates an example welding-type system 100 including an integrated welding torch 140. The welding type system 100 includes a power supply 110 for delivery of welding power, a cooler 120 to provide coolant, a gas source 130 for delivery of shielding gas, a welding torch 140, and a ground clamp 150. The welding torch 140 includes a torch head 142 and a torch handle 144 through which shielding gas, electric current, and coolant flow to the torch head 142.

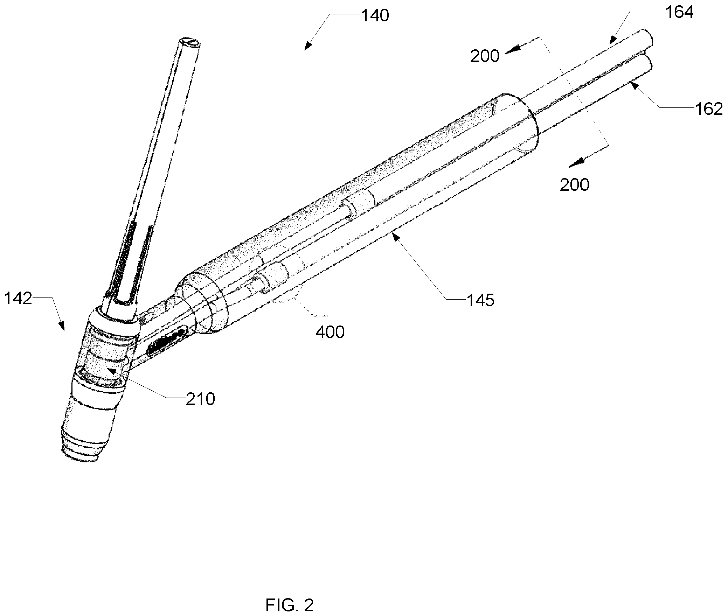

In the illustrated example, the power supply 110 is configured to supply power to welding operations and/or preheating operations. The power supply 110 includes one or more connections to provide welding power and/or shielding gas to the welding torch 140. In some examples, the power supply 110 provides the welding power and shielding gas via separate connections as illustrated in FIG. 2. For example, a gas connection 111 and power connections 112 and 113 may be provided separately. In some other examples, the one or more connections may be provided via a single connection and/or single welding cable, such as welding cable 170.

The power supply 110 receives shielding gas from the gas source 130 to provide to the welding torch 140 via a gas line/hose 132. Shielding gas from the gas source 130 may run through the gas hose 132 which runs through the torch handle 144. A cable 114 may be connected to the power supply 110 to provide electric current to the torch head 142 via a coolant power coolant power connector 160. The power supply 110 forms a complete circuit with a weld piece (not shown) via the power connection 113 to the ground clamp 150 and power connection 112 to the cable 114. In some other examples, the welding cable 170 may include the gas line 132 and cable 114 in order to provide shielding gas and electric current to the torch head 142.

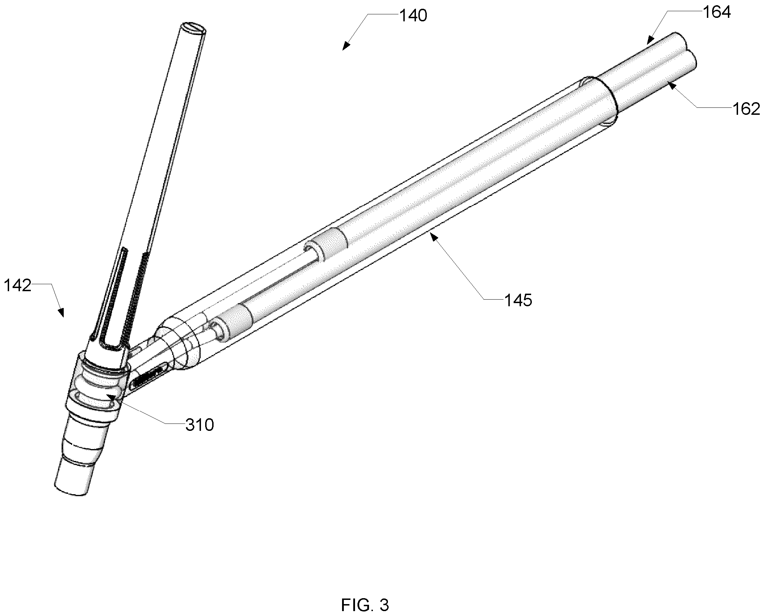

The cooler 120 includes a coolant output 124 and a coolant input 126 that connect to the coolant power connector 160. The coolant power connector 160 provides coolant towards the torch head 142 via coolant line 162 and receives coolant from the torch head 142 via coolant line 164. In some other examples, the coolant line 164 provides coolant to the torch head 142 and coolant line 162 provides coolant away from the torch head 142. One or both coolant lines 162 and 164 may also include a welding power conductor (described further below with regards to FIGs. 3-6) that carries electric current from the coolant power connector 160 to the welding torch 140. The coolant lines 162 and 164 may be hoses or other tubing comprised of non-conductive material such as rubber or plastic.

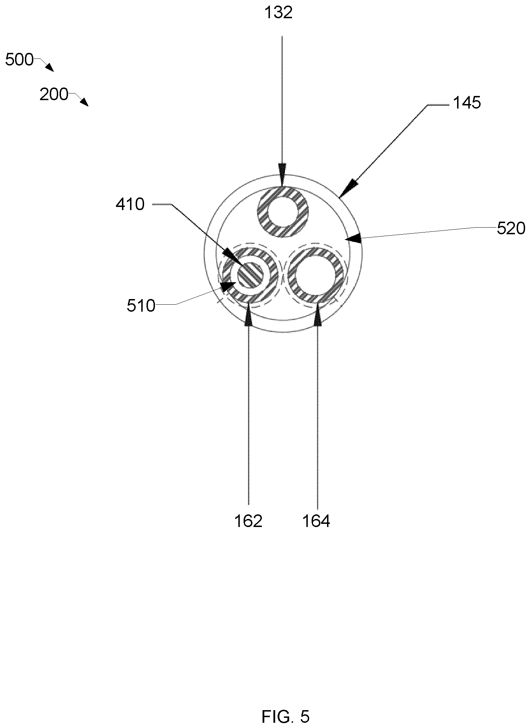

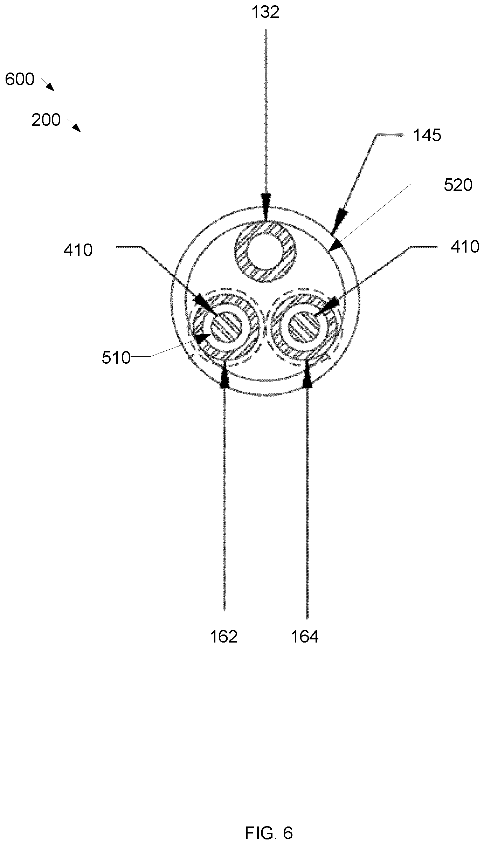

The gas hose 132, coolant lines 162 and 164, and welding power conductors (not shown but described with respect to FIG. 5 and FIG. 6) may run through the torch handle 144 which is made up of a torch body 145. In some examples, the torch body 145 is a conductive tube constructed with copper or brass, and may be overmolded by a non-conductive material such as thermoplastic (e.g., high temperature grades such as PPS or LCP), elastomers (e.g., silicone or FKM), or thermosetting polymers (e.g., phenolic or epoxy), etc. The example torch head 142 is also constructed with conductive materials such as brass or copper. The torch head 142 conducts the welding power to an electrode, such as a tungsten electrode, for formation of a welding arc. The torch head 142 may include components to hold the tungsten electrode in the torch head, such as a collet.

The torch head 142 and torch body 145 may be brazed together or otherwise coupled to form a torch assembly 146. In some examples, the torch assembly 146 may be covered in overmolding materials to form one integral piece. In other examples, the torch head 142 or the torch body 145 may be covered by a casing or overmolding material. In some examples, the gas line 132, and two coolant lines 162 and 164 run through the torch body 145 and may be overmolded with the torch body 145 as one integral piece to form the welding torch 140.

In some examples, the torch assembly 146 is a single cable assembly in which one coolant line includes a power conductor. In some other examples, the torch assembly 146 is a dual cable assembly in which both coolant lines include power conductors. The single cable assembly and dual cable assembly will be described in further detail with regards to FIG. 5 and FIG. 6.

FIG. 2 is a perspective view of an example integrated welding torch of FIG. 1. The welding torch 140 includes a torch head 142 and a torch body 145. Coolant lines 162 and 164 run through the torch body 145 providing coolant toward and away from the torch head 142. The coolant lines 162 and 164 may be arranged in a variety of configurations in order to provide a path for coolant to reach the torch head 142. In some examples, the coolant lines 162 and 164 may be arranged in a pass through configuration 210 as illustrated, where coolant passes through the torch head 142. In a pass through configuration 210, coolant lines 162 and 164 flow to one or more conduits that pass through one or more coolant passages (not shown) in the torch head 142. In some other examples coolant lines 162 and 22 may be arranged in a wrap-around fashion around the torch head 142, where the coolant lines 162 and 164 wrap around the torch head 142 in order to cool the torch head 142.

FIG. 3 is a perspective view of a second example welding torch of FIG. 1. The welding torch 140 includes a torch head 142 and a torch body 145. Coolant lines 162 and 164 run through the torch body 145 providing coolant toward and away from the torch head 142. In some examples, the coolant lines 162 and 164 may be arranged in a wrap-around configuration 310 as depicted in FIG. 3. In a wrap-around configuration 310, coolant lines 162 and 164 flow to one or more conduits in the shape of a "U" or a loop that is pinched around the torch head 142.

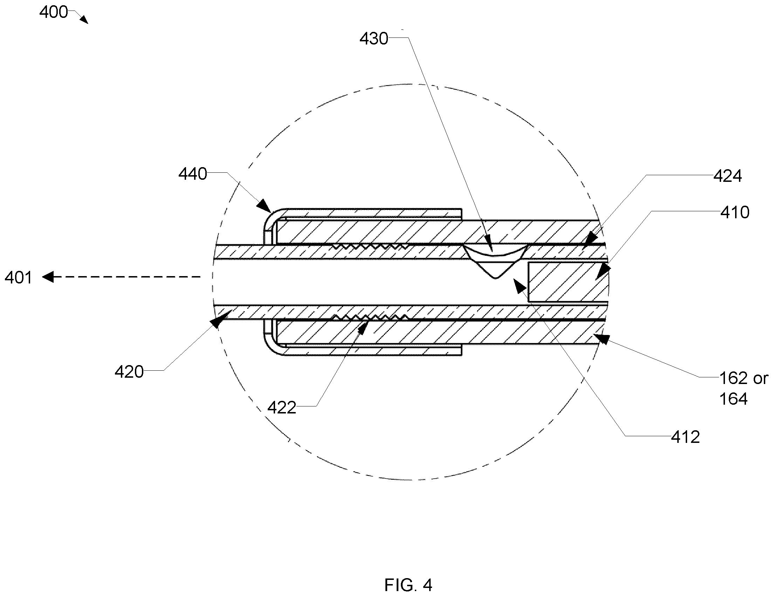

The connection 400 between the coolant lines 162 and 164 and the torch head 142 is described in further detail below with regards to FIG. 4. In some examples, one or both of the coolant lines 162 and 164 include a power conductor. 200 is a cross-section of the coolant lines 162 and 164. In some examples, the torch assembly 146 is a single cable assembly in which one coolant line includes a power conductor and is described below with reference to FIG. 5. In some other examples, the cable assembly 146 is a dual cable assembly in which both coolant lines include power conductors, which will described in further detail below with regards to FIG. 6.

FIG. 4 is a cross-section detailed view of the connection 400 of FIG. 2. The connection 400 may be of coolant line 162 or 164. A power conductor cable 410 runs from the power supply 110 towards the torch head 142 within the coolant line 162, 164 (in the direction of 401, pointing towards the welding torch 140). The connection 400 depicts a power conductor cable 410, conductive tubing 420, a side bore hole 430, and a hose clamp, ferrule 440 or similar device.

The welding power conductor cable 410 may be used to directly connect the coolant lines 162 and 164 to the conductive tubing 420. In some examples, connecting the coolant lines 162 and 164 to the conductive tubing 420 may include coupling the coolant lines to the conductive tubing 420 with, for example, a coupler, a crimp connector, ferrule, or any type of coupler that provides a radial force to secure the coolant line 162 or 164 to the conductive tubing 420 (e.g., a crimped-style fitting, a compression fitting, a threaded compression fitting, etc.). As used herein, a "direct" connection or "directly" connecting refers to connecting two components without an intermediate components between the directly connected components. For example, the coolant lines 162, 164 make direct contact with the respective conductive tubing 420, such as to provide a fluid seal, without an intermediate connection or component. As shown, a ferrule 440 is used to secure the welding power conductor cable 410 to the coolant line 162 or 164 by crimping at 412 to form a solid electric connection between the conductive tubing 420 and the welding power conductor cable 410.

The conductive tubing 420 may be inserted into coolant line 162 and/or coolant line 164, such that the welding power conductor cable 410 is inserted a distance into the conductive tubing 420. In some examples, the conductive tubing 420 includes barbed features 422, such as ridges or grooves, to provide a rough surface for gripping.

The power conductor cable 410 may end at a termination point 412 before the side bore hole 430. The ferrule 440 may be used to directly connect the coolant lines 162 or 164 to conductive tubing 420 as described above. In some examples, when the ferrule 440 is placed and the conductive tubing 420 is crimped at 424, the side bore hole 430 is formed that allows coolant to flow into a coolant passage within the conductive tubing 420. By crimping the conductive tubing at 424, coolant is allowed to pass from a space (not shown in FIG. 4, depicted as 510 in FIGs. 5 and 6) in the coolant line 162 or 164, which is external to the power conductor cable 410 and within coolant line 162 or 164, through the side bore hole 430 and into the conductive tubing 420 and towards the welding torch 140 in direction 401.

FIG. 5 is a detailed cross-section 500 of the example cross-section 200 of FIG. 2, in a case of a single cable assembly. In some examples, a single cable assembly includes a gas line 132, two coolant lines 162 and 164, with one coolant line 162 or 164 including a welding power conductor cable 410. The gas line 132 and coolant lines 162 and 164 are enclosed in cable jacket 520 which may be placed in the torch body 145. The gas line 132 provides shielding gas to the torch head 142, while coolant lines 162 and 164 provide coolant towards and away from the torch.

The welding power conductor cable 410 conducts electric current to the torch head 142. Although the welding power conductor cable 410 is depicted as conducting electric current through coolant line 162, the welding power conductor may be included in coolant line 164. In some examples, coolant line 162 is used to push cold coolant towards the torch head 142, and coolant line 164 is used to return hot coolant away from the torch head 142. In some other examples, coolant line 164 is used to push coolant towards the torch head 142, and coolant line 162 is used to return hot coolant away from the torch head 142.

The welding power conductor cable 410 provides electric current to the torch head 142 and is enclosed in a non-conductive material. Coolant may flow annularly over and around the non-conductive material that surrounds the welding power conductor cable 410 in space 510. The coolant may substantially surround the welding power conductor cable 410 such that the flow of coolant partially or almost completely covers the non-conductive material when flowing towards and away from the torch head 142.

The gas line 132 and coolant lines 162 and 164 may be surrounded by a cable jacket 520. The cable jacket 520 may be made of a material such as PVC (Polyvinyl Chloride), PUR (polyurethane), PE (Polyethylene), or TPE (thermoplastic elastomer).

FIG. 6 is a detailed cross-section 600 of the example cross-section 200 of FIG. 2 in a case of a dual cable assembly. In some examples, a dual cable assembly includes two coolant lines 162 and 164, both including a welding power conductor cable 410, and a gas line 132. The gas line 132 and coolant lines 162 and 164 are enclosed in cable jacket 520 which may be placed in the torch body 145. The gas line 132 provides shielding gas to the torch head 142, while coolant lines 162 and 164 provide coolant towards and away from the torch.

In some examples, coolant line 162 is used to push cold coolant towards the torch head 142, and coolant line 164 is used to return hot coolant away from the torch head 142. In some other examples, coolant line 164 is used to push coolant towards the torch head 142, and coolant line 162 is used to return hot coolant away from the torch head 142.

The welding power conductor cables 410 in the coolant lines 162 and 164 provide electric current to the torch head 142 and are enclosed in a non-conductive material. Coolant may flow annularly over and around the non-conductive material of the welding power conductor cables 410 in space 510. The coolant may substantially surround the welding power conductors 410 such that the flow of coolant partially or almost completely covers the non-conductive material of the welding power conductor cables 410 when flowing towards and away from the torch head 142. In some examples, the welding power conductor cable 410 that runs through the coolant line 162 may be of a different gauge than the welding power conductor cable 410 that runs through the coolant line 164. The welding power conductor cables 410 of each of the coolant line 162 and coolant line 164 may be selected to be of a same gauge or different gauges in order to optimize performance (e.g. to increase power and/or reduce resistance of electrical current being conducted through the welding power conductor cables 410). For example, the coolant line 164 transporting coolant to the torch head may include coolant that is cooler than coolant line 162 and may include a welding power conductor cable 410 that is a higher gauge than welding power conductor cable 410 of the coolant line 162.

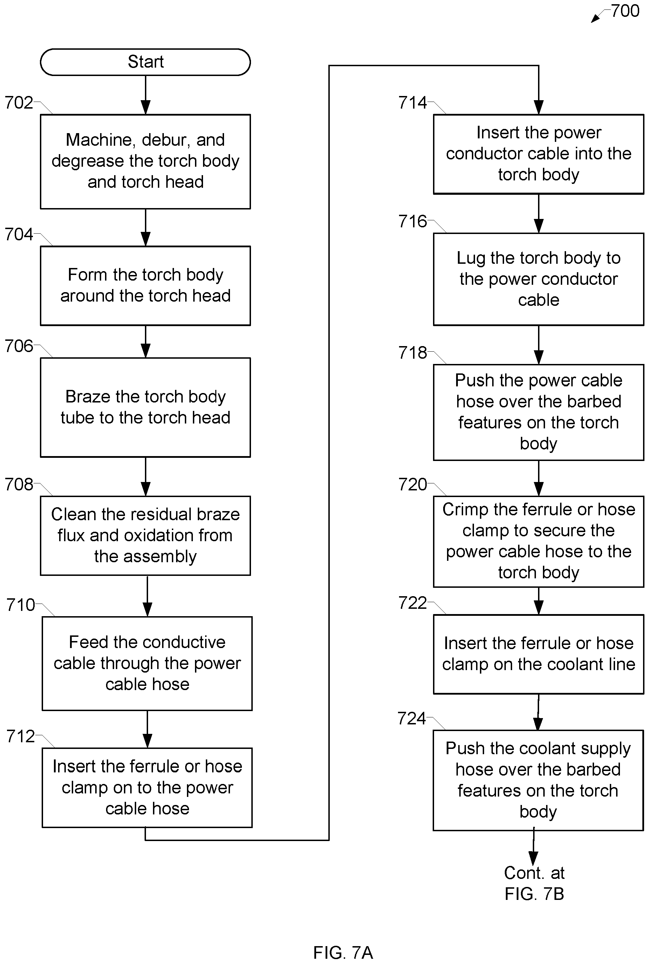

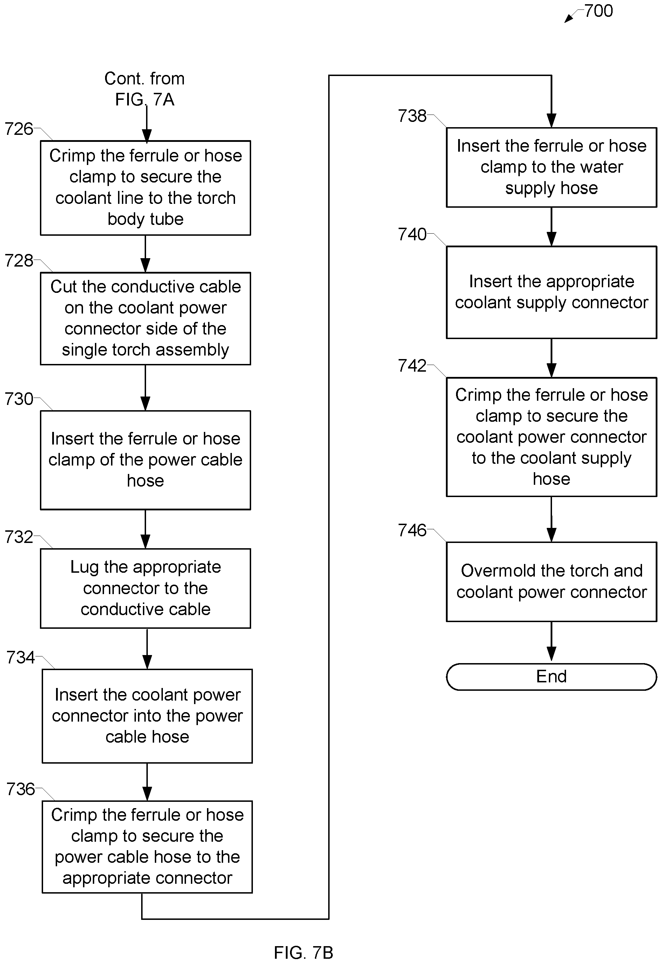

FIGs. 7A-7B is a flowchart representative of an example method 700 to construct a single cable assembly as depicted in FIG. 5 with one coolant line 162 including a welding power conductor cable 410. While the method 700 illustrates an example order of blocks or steps, the order of some of the blocks may be modified, or blocks may be divided or combined as appropriate. The example method 700 is described below with reference to the example cable and components of FIGS. 1-5, but may be modified as appropriate for other welding torch implementations.

Step 702 involves machining, deburring, and degreasing the torch body 145 and torch head 142. Step 704 involves forming the torch body 145 around the torch head. Step 706 involves brazing the torch body 145 to the torch head 142 to form a single cable assembly. Step 708 involves cleaning residual braze flux and oxidation from the single cable assembly. At step 710, the power conductor cable 410 is fed through a power cable hose.

Step 712 involves inserting the ferrule or hose clamp on to the power cable hose. Step 714 involves inserting the power conductor cable 410 into the torch body 145. Step 716 involves lugging the torch body 145 to the power conductor cable 410. At step 718, the power cable hose is pushed over the barbed features 422 on the torch body 145.

Step 720 involves crimping the ferrule or hose clamp to secure the power cable hose to the torch body 145. Step 722 involves inserting the ferrule or hose clamp on the coolant line 162 or 164. At step 724, the coolant line 162 or 164 is pushed over barbed features on the torch body 145.

Step 726 involves crimping the ferrule 440 or hose clamp to secure the coolant line 162 or 164 to the torch body 145. Step 728 involves cutting the power conductor cable 410 on a power supply side of the torch assembly. Step 730 involves inserting the ferrule or hose clamp of the power cable hose. Step 732 involves lugging the appropriate connector to the power conductor cable 410. At step 734, the connector is inserted into the power cable hose.

At step 736, the ferrule or hose clamp is crimped to secure the power cable hose to the appropriate connector. Step 738 involves inserting the ferrule or hose clamp to the water supply hose. Step 740, involves inserting the appropriate coolant supply connector. At step 742, the ferrule or hose clamp is crimped to secure the coolant supply connector to the coolant line 162 or 164. At step 744, the torch and machine connection are overmolded. In some examples, overmolding may be performed using an injection molding tool.

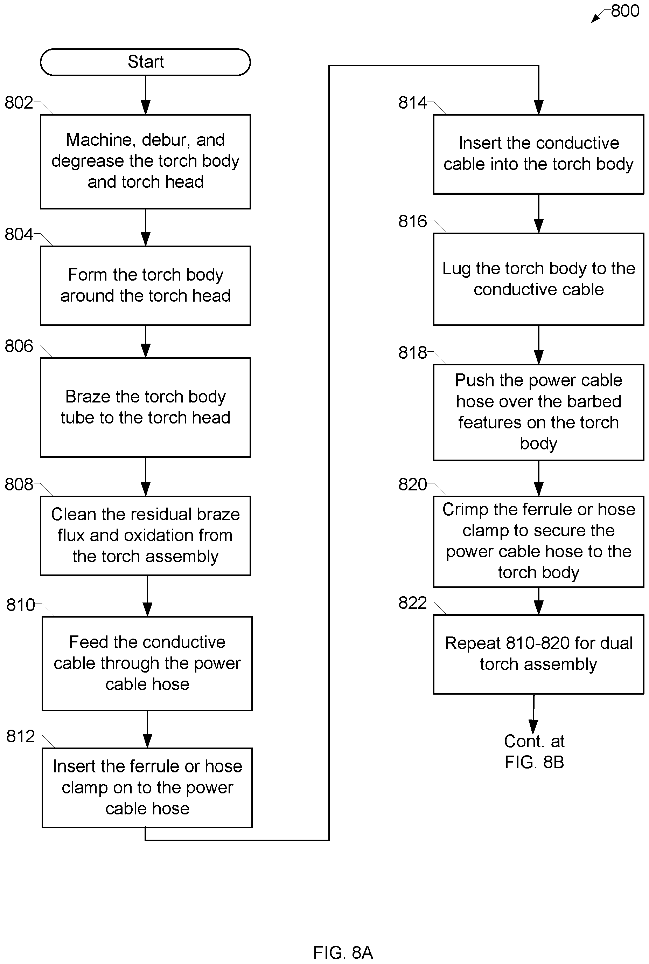

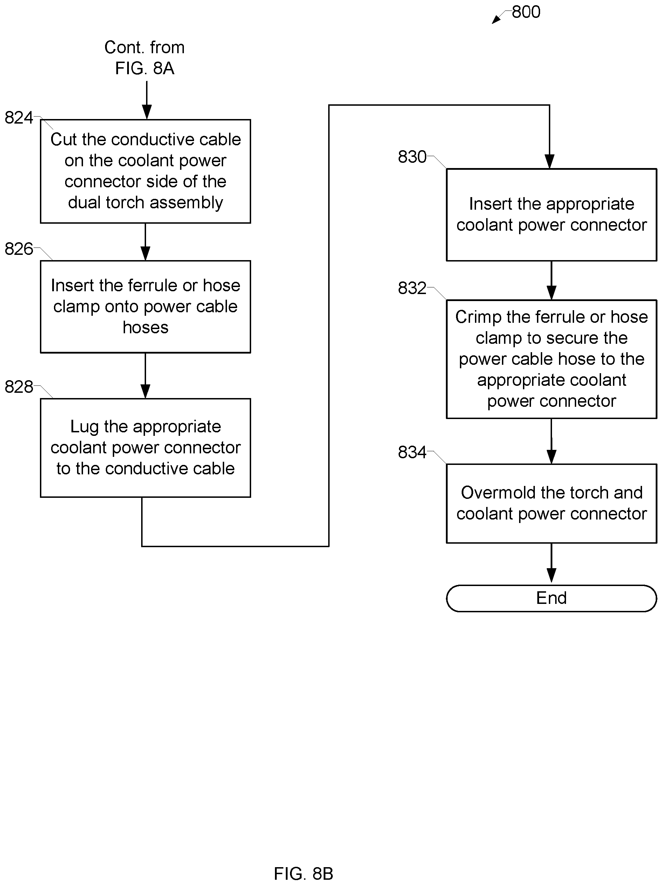

FIGs. 8A and 8B is a flowchart representative of an example method 800 to construct a dual cable assembly as depicted in FIG. 6 with two coolant lines 162 and 164 and with two welding power conductor cables 410. Step 802 involves machining, deburring, and degreasing the torch body 145 and the torch head. Step 804 involves forming the torch body 145 around the torch head. Step 806 involves brazing the torch body 145 to the torch head. Step 808 involves cleaning the residual braze flux and oxidation from the assembly. Step 810 involves feeding the power conductor cable 410 through the power cable hose. Step 812 involves inserting the ferrule or hose clamp on to the power cable hose.

At step 814, the power conductor cable 410 is inserted into the torch body 145. Step 816 involves lugging the torch body 145 to the power conductor cable 410. Step 818 involves pushing the power cable hose over the barbed features on the torch body 145. At step 820, the ferrule or hose clamp is crimped to secure the power cable hose to the torch body 145. Step 822 involves repeating steps 810-820 for the second power conductor cable. At step 824, the power conductor cables 410 are cut on a power supply side of the torch assembly.

Step 826 involves inserting the ferrule or hose clamp on to both power cable hoses. Step 828 involves lugging the appropriate connector to the power conductor cable 410. Step 830 involves inserting the connectors into the power cable hose. Step 832 involves crimping the ferrule or hose clamps to secure the power cable hose to the appropriate connectors. Step 834 involves overmolding the torch and machine connection.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

## Claims

1. A welding torch, comprising:
a torch head configured to provide welding-type power;
a torch handle comprising conductive tubing electrically and mechanically connected to the torch head at a first end of the conductive tubing;
two or more welding power conductors in parallel, two or more coolant lines in series, and a gas conductor arranged within the conductive tubing; and
a casing configured to cover the two or more welding power conductors, the two or more coolant lines, the gas conductor, and the conductive tubing,
wherein the two or more welding power conductors and the two or more coolant lines route coolant and an electrical current to the torch head.

2. The welding torch of claim 1, wherein the two or more coolant lines include the two or more welding power conductors.

3. The welding torch of claim 1, wherein the torch head is joined to the conductive tubing within the torch handle.

4. The welding torch of claim 1, wherein the conductive tubing comprises a side bore hole and is fluidly coupled to the two or more coolant lines via a coolant passage.

5. The welding torch of claim 1, wherein the conductive tubing connects directly to a power cable.

6. The welding torch of claim 1, further comprising a power cable directly connected to the conductive tubing, wherein the power cable includes the two or more welding power conductors, the gas conductor, and the two or more coolant lines.

7. The welding torch of claim 1, wherein the casing comprises an overmolding.

8. The welding torch of claim 1, wherein the casing is further configured to cover the torch head, the torch handle, the gas conductor, and the one or more coolant lines.

9. The welding torch of claim 1, wherein the casing is the torch handle, and the torch handle is integrated with the two or more welding power conductors, the gas conductor, and the two or more coolant lines.

10. The welding torch of claim 1, wherein the two or more welding power conductors, the gas conductor, and the two or more coolant lines are configured to be directly connected to an end of a hose over the conductive tubing.

11. The welding torch of claim 1, wherein the two or more welding power conductors, the gas conductor, and the two or more coolant lines terminate at a power supply connector to connect to a power supply and a cooler.

12. A welding torch, comprising:
a torch head configured to conduct welding-type power;
a torch handle including conductive tubing coupled to the torch head; and
a torch cable integrally coupled to the torch handle at a first end of the torch cable and comprising a power supply connector on a second end of the torch cable, the torch cable and the torch handle comprising:
an electrical path from the power supply connector to the torch head;
a coolant path to cool the torch head, the coolant path and the electrical path sharing at least one component within at least one of the torch handle or the torch cable; and
a gas path to the torch head.

13. The welding torch of claim 12, wherein the coolant path includes the electrical path.

14. The welding torch of claim 12, further comprising a casing configured to cover the torch head, the torch handle, and the torch cable.
